# EUROPÄISCHE PATENTSCHRIFT

(11) **EP 0 694 466 B1**
(45) Veröffentlichungstag und Bekanntmachung des Hinweises auf die Patenterteilung: **22.10.1997**
(21) Anmeldenummer: 95110847.1
(22) Anmeldetag: 11.07.1995
(51) Int. Cl.: B62D 25/18, B62D 25/16

(54) **Anpassungsfähige Kotschützerbefestigung**
Adaptive attachment for mud-guards
Fixation adaptative pour garde-boue

(30) Priorität: 29.07.1994 US 283016
(43) Veröffentlichungstag der Anmeldung: 31.01.1996
(73) Patentinhaber: DEERE & COMPANY, Moline, Illinois 61265 (US)
(72) Erfinder: Rowland, Rodney Keith, 628 00 Brno-Lisen (CZ)
(74) Vertreter: Feldmann, Bernhard

(56) Entgegenhaltungen:
- DE-A- 3 401 631
- DE-U- 8 605 865
- FR-A- 351 769
- GB-A- 165 501
- GB-A- 310 781

## Beschreibung

Die Erfindung betrifft eine Kotschützerbefestigung gemäß dem Oberbegriff des Patentanspruchs 1, durch die sich ein Kotschützer an der Lenkachse eines Fahrzeuges in der Nähe eines lenkbaren Rades befestigen läßt. Die Kotschützerbefestigung enthält ein zwischen der Lenkachse und wenigstens einer Aufnahme für den Kotschützer angeordnetes flexibles Teil.

Eine Kotschützerbefestigung mit den gattungsgemäßen Merkmalen ist aus der GB-A-165,501 für einen Kotschützer bekannt, der im unteren Bereich eines Rades seitlich neben diesem angeordnet ist, um seitlich abspritzenden Schmutz abzufangen. Diese Kotschützer eigenen sich jedoch nicht für landwirtschaftliche Schlepper.

Viele landwirtschaftliche Schlepper haben Kotschützer für die Vorderräder, um abspritzenden Schmutz und Schnee abzufangen. Diese Kotschützer können jedoch beim scharfen Einschlagen der Vorderräder gegen eine Fahrzeugverkleidung oder den Schlepperrahmen stoßen. Dies kann eine Beschädigung des Kotschützers und/oder der Fahrzeugverkleidung zur Folge haben. Ferner können der Lenkeinschlagwinkel und die Wendigkeit des Fahrzeugs eingeschränkt werden, was insbesondere bei Reihenkulturschleppern Probleme macht, deren Räder für eine Anpassung an die Reihenkultur eng, d. h. auf eine schmale Spur einstellbar sein müssen.

Um die geschilderten Probleme zu überwinden, wurde durch verschiedene Konstruktionen vorgeschlagen, den Kotschützer hinsichtlich der Räder verdrehbar anzuordnen. Beispielsweise beschreibt die US-A-5 074 573 eine flexible Kotschützerbefestigung für ein lenkbares Rad, bei der ein Kotschützertragarm an einer Hülse befestigt ist. Die Hülse ist über eine Torsionsfeder auf einer an einem Vorderachsrahmenteil befestigten senkrechten Welle verdrehbar gelagert. Auf der Fahrzeugachse ist ein gesonderter Anschlag angeordnet, an dem beim Einschlagen der Räder der Kotschützerarm anschlägt, so daß eine Berührung zwischen dem Kotschützer und den Fahrzeugseitenteilen vermieden wird. Diese Lösung erfordert es jedoch, daß die Bedienungsperson oder ein Mechaniker den Anschlag auf die jeweilige Reifengröße und/oder Spurweite einstellt.

Die US-A-332 022 zeigt eine flexible Kotschützerbefestigung für ein lenkbares Vorderrad, bei der ein Kotschützertragarm an einem Ende einer Torsions- oder Federstange befestigt ist. Das andere Ende der Federstange ist im Inneren einer rohrförmigen Aufnahme mit dieser verschraubt, die ihrerseits an der Vorderachse befestigt ist. Wenn das Rad verdreht wird, kann der Kotschützer gegen ein Seitenteil des Fahrzeugs oder eine Führung stoßen, ohne daß dadurch der weitere Einschlag des Rades begrenzt wird, da sich hierbei die Federstange zwischen ihren Einspannstellen verdreht.

Die FR-A-676 216 beschreibt eine flexible Kotschützerbefestigung für ein lenkbares Rad, bei der eine Kotschützerklemme an einem Ende einer Schraubenfeder befestigt ist. Das andere Ende der Schraubenfeder ist an einem Gehäuse befestigt, welches seinerseits an einem Träger festgelegt ist, der sich mit dem Rad beim Lenken verdreht.

Bei den bekannten Konstruktionen erlaubt die Kotschützerbefestigung lediglich eine Verdrehbewegung des Kotschützers. Es ist jedoch eine anpassungsfähige Kotschützerbefestigung wünschenswert, die sowohl eine Verschwenk- als auch eine Biegebewegung zuläßt, um beim Einschlagen der Räder einerseits auf einen Kontakt zwischen dem Kotschützer und dem Fahrzeugrahmen oder Fahrzeugrumpf zu reagieren und andererseits eine Anpassung oder ein Auslenken zuzulassen, um auch auf ein Anschlagen des Kotschützers an andere Objekte als den Fahrzeugrahmen oder -rumpf zu reagieren.

Idealerweise liegt die Drehachse des Kotschützers im Zentrum des Reifens, so daß der Kotschützerabstand auch bei seinem Anschlagen aufrechterhalten wird. Ein derartiger Drehort ist jedoch bei Standardrädern und bei angetriebenen Achsen mit äußeren Planetengetrieben schwierig zu realisieren.

Die der Erfindung zugrunde liegende Aufgabe wird darin gesehen, eine anpassungsfähige Kotschützerbefestigung anzugeben, durch die die geschilderten Probleme überwunden werden. Insbesondere soll die Kotschützerbefestigung sowohl ein Verdrehen um eine Achse als auch ein verbiegen oder Ausschwenken zulassen. Die Einstellung von Kotschützeranschlägen auf die aktuelle Reifengröße und/oder Spurweite durch eine Bedienungsperson oder einen Mechaniker soll entbehrlich sein. Ferner soll die Kotschützerbefestigung haltbar und kostengünstig herstellbar sein und sich einfach an einem Fahrzeug, insbesondere einem Ackerschlepper installieren lassen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Eine bevorzugte Ausgestaltung der erfindungsgemäßen Kotschützerbefestigung enthält eine an der Fahrzeugachse befestigte Tragkonsole, zwei am Kotschützer befestigte Arme und eine flexible Lagerung, die zwischen der Tragkonsole und den Armen eingefügt ist. Die Lagerung ist um eine Torsionsachse drehbar und in Richtungen quer zur Torsionsachse auslenkbar oder verbiegbar. Durch die Fähigkeit der Lagerung, sich um ihre Achse zu verdrehen und sich zu verbiegen, können Ermüdungsstöße oder harte Erschütterungen von dem Kotschützer isoliert oder gedämpft werden. Die Lagerung enthält einen nachgiebigen Kern und zwei keilförmige Endkappen, die beidseits des Kerns befestigt sind. Die Lagerung weist eine Mittelachse auf, die hinsichtlich der Längsausrichtung des Rades nach hinten und seitlich nach innen von dem Rad weg geneigt ist. Diese Schwenk- oder Drehgeometrie bewirkt, daß beim Anschlagen des Kotschützers die Kotschützerbefestigung federnd nachgibt und der Kotschützer angehoben wird, wobei ein ausreichender Freiraum für einen großen Anschlagsbereich aufrechterhalten wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Darstellung einer erfindungsgemäßen flexiblen, anpassungsfähigen Kotschützerbefestigung,
- Fig. 2: die perspektivische Darstellung einer Kotschützerbefestigung gemäß Fig. 1, die an einer Achse in der Nähe eines lenkbaren Rades angreift,
- Fig. 3: die Seitendarstellung einer Tragkonsole der erfindungsgemäßen Kotschützerbefestigung,
- Fig. 4: die Seitenansicht in Richtung der Pfeile 4 - 4 der in Fig. 3 dargestellten Tragkonsole,
- Fig. 5: die Seitenansicht eines flexiblen Lagerungsbereichs der erfindungsgemäßen Kotschützerbefestigung,
- Fig. 6: eine Schnittdarstellung des in Fig. 5 dargestellten Lagerungsbereichs,
- Fig. 7: die Aufsicht des Befestigungsbocksbereichs der erfindungsgemäßen Kotschützerbefestigung,
- Fig. 8: die Seitenansicht in Richtung der Pfeile 8 - 8 des in Fig. 7 dargestellten Befestigungsbockbereichs und
- Fig. 9: die perspektivische Darstellung eines Schutzplattenmerkmals gemäß vorliegender Erfindung.

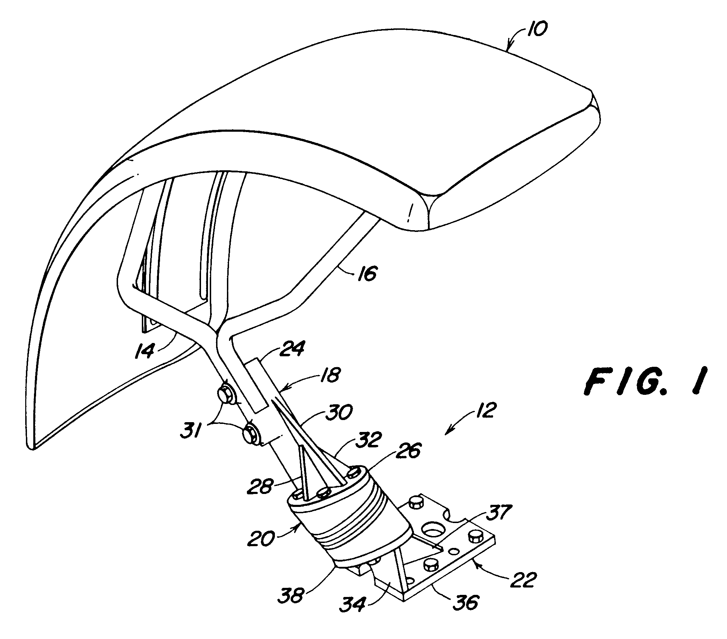

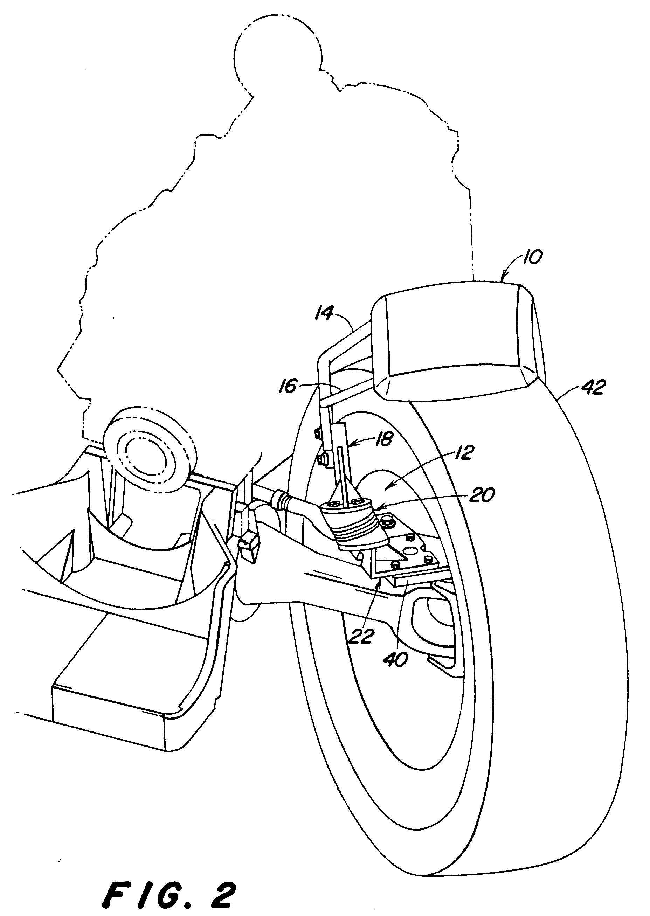

Aus den Fig. 1 und 2 geht ein Kotschützer 10, auch Schutzblech genannt, für ein Fahrzeug hervor, der durch einen Kotschützerträger bzw. eine Kotschützerbefestigung 12 getragen wird. Die Kotschützerbefestigung 12 enthält einen ersten und einen zweiten Arm 14 und 16. Das bezüglich der Fahrzeugachse radial nach außen weisende Ende jedes Armes 14, 16 ist an dem Kotschützer 10, beispielsweise durch Verschweißen mit an der Innenseite des Kotschützers 10 angeordneten Kotschützertragstangen, befestigt. Der Kotschützer 10 ist durch Schrauben an der Kotschützertragstruktur 12 befestigt. Die nach innen weisenden Enden der beiden Arme 14, 16 sind zusammengeschweißt. Das innere Ende des Arms 14 ist etwas länger als das Ende des Arms 16 und weist Öffnungen auf, so daß es an einer Tragkonsole oder Haltevorrichtung 18 angeschraubt werden kann. Der untere Teil der Haltevorrichtung 18 ist an dem oberen Ende einer flexibel anpassungsfähigen Lagerung oder Feder-Dämpfer-Einheit 20 befestigt. Der untere Teil der Lagerung 20 ist an einem oberen Ende eines Befestigungsbocks 22 festgelegt.

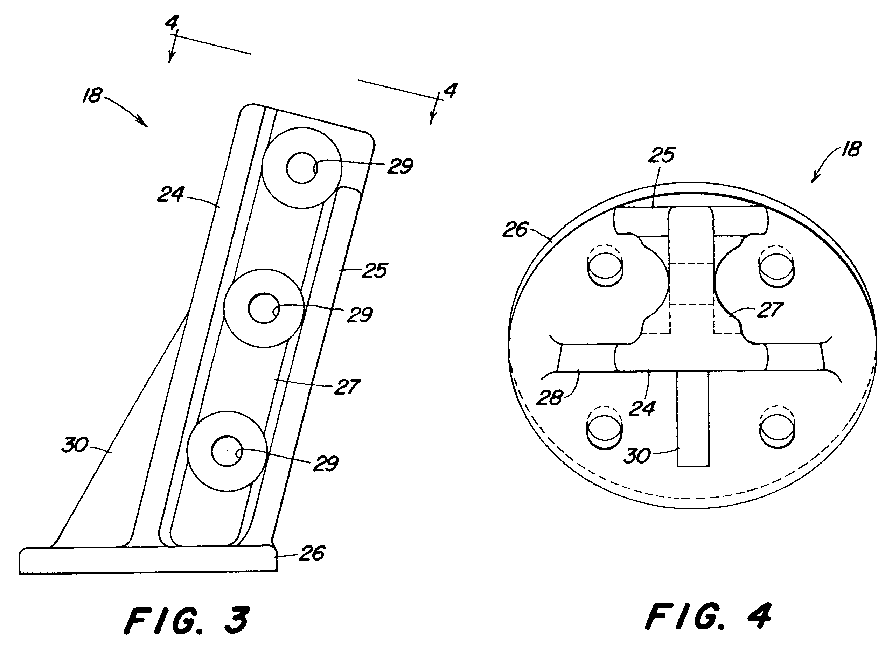

Wie am besten aus Fig. 3 und 4 ersichtlich, enthält die Haltevorrichtung 18 zwei Platten 24 und 25 und eine dazwischen liegende Wandung 27, die alle von einem scheibenförmigen Sockel 26 abstehen. Wie Fig. 4 zeigt, hat die Wandung 27 konkav ausgebildete Seiteneinbuchtungen, welche angepaßt sind, um den Tragarm 14 des Kotschützers 10 aufzunehmen. Mehrere, beispielsweise drei, Bohrungen 29 sind in die Wandung 27 eingelassen, so daß der Arm 14 mittels Schrauben 31, die durch die entsprechenden Bohrungen 29 gesteckt werden, an der Wandung 27 befestigbar ist. Dreieckförmige Streben 28, 30 und 32 versteifen die Platten 24 und 25 gegenüber dem Sockel 26. Wie Fig. 3 zeigt, verläuft die Ausrichtung der Platten 24, 25 mit der Wandung 27 gegenüber der Lotlinie des Sockels 26 geneigt und schließt zu dieser einen Winkel von ungefähr 15 Grad ein, so daß sich die Platten 24, 25 und die Wandung 27 bezüglich der Fahrzeugausrichtung schräg nach oben und hinten von dem Sockel 26 aus erheben.

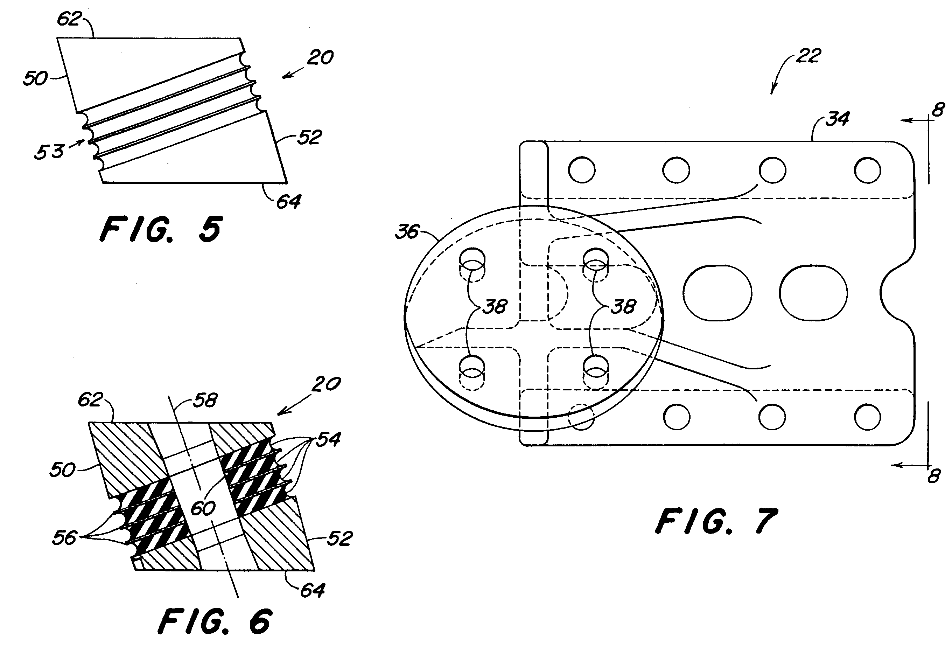

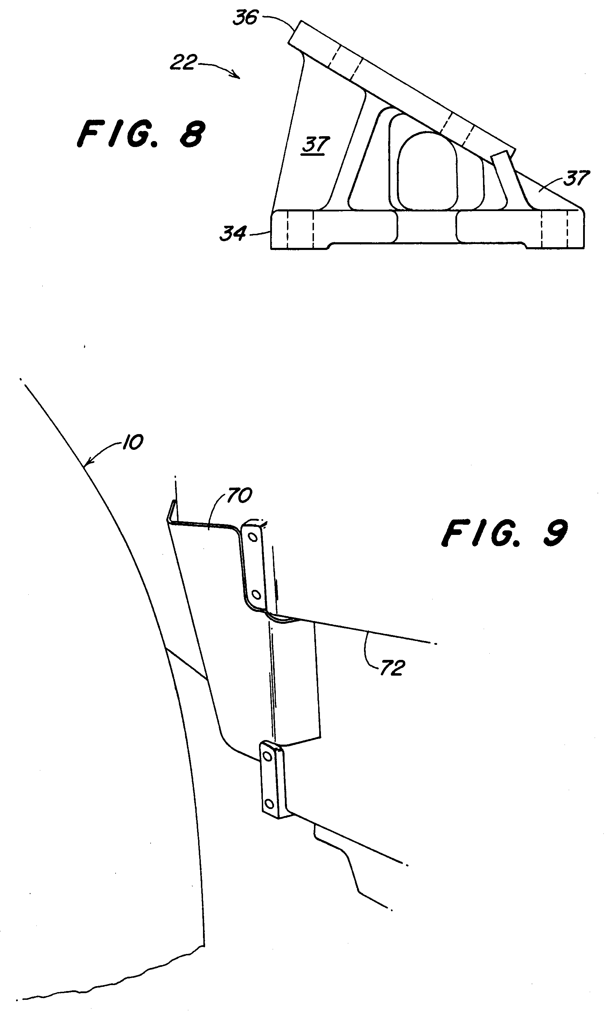

Wie aus Fig. 7 und 8 ersichtlich, enthält der Befestigungsbock 22 eine im wesentlichen rechteckförmige Platte 34 und eine Tragscheibe 36, die von der Platte 34 durch mehrere Tragteile 37 getragen wird. Die Tragscheibe 36 enthält einen Satz Löcher 38, so daß sie sich mit dem unteren Ende der Lagerung 20 verschrauben läßt. Wie Fig. 2 zeigt, ist die Platte 34 vorzugsweise mit einem Lenkschenkel 40 der die Reifen 42 tragenden Fahrzeugachse verschraubt. Wie Fig. 8 zeigt, ist die Tragscheibe 36 um einen Winkel von vorzugsweise 20 bis 30 Grad bezüglich der horizontal ausgerichteten Platte 34 nach hinten abgekippt. Dadurch ist die Tragscheibe 36 bei auf dem Achsenteil 40 montiertem Befestigungsbock 22 hinsichtlich der Längsausrichtung der Reifen 42 um einen Winkel von etwa 20 bis 30 Grad bezüglich der Fahrzeuglängsrichtung nach hinten geneigt.

Gemäß der Fig. 5 und 6 enthält die Lagerung 20 eine obere Endkappe 50, eine untere Endkappe 52 und ein flexibles zylindrisches Mittelstück 53, welches durch einen Stapel von abwechselnd aufeinander geschichteten ringförmigen Gummischeiben 54 und ringförmigen Stahlzwischenscheiben 56 gebildet ist. Jede der Stahlzwischenscheiben 56 liegt zwischen zwei benachbarten Gummischeiben 54. Wie aus Fig. 6 hervorgeht, bildet das Mittelstück 53 eine Mittelachse 58, die die Lage einer durch die ganze Lagerung 20 verlaufenden Bohrung 60 definiert.

Jede der Endkappen 50, 52 hat eine zylindrische Keilform mit einer dickeren und einer schmaleren Seite. Ferner weist jede Endkappe 50, 52 zwei sich gegenüberliegende Stirnflächen auf, die zu einander einen Winkel von vorzugsweise etwa 20 Grad einschließen. Wie aus Fig. 6 hervorgeht, liegen die Endkappen 50, 52 vorzugsweise an den Enden des Mittelstücks 53 derart an, daß ihre dicken Seiten in entgegengesetzte Richtungen weisen und daß die nach außen weisende Stirnfläche 62 der oberen Endkappe 50 parallel zu der nach außen weisenden Stirnfläche 64 der unteren Endkappe 52 ausgerichtet ist.

Die Lagerung 20 wird derart auf die Tragscheibe 36 montiert, daß die dicke Seite der unteren Endkappe 52 dem Reifen zugewandt ist. Damit ist die Mittellinie 58 der Lagerung 20 bezüglich der Längsausrichtung der Reifen 42 um einen Winkel von ungefähr 30 Grad nach hinten (d. h. ein oberer Abschnitt der Mittellinie liegt weiter hinten als ein unterer Abschnitt der Mittellinie) und einen Winkel von ungefähr 20 Grad von dem Reifen 42 weg (d. h. ein oberer Abschnitt der Mittellinie liegt weiter vom Reifen weg als ein unterer Abschnitt der Mittellinie) gegenüber der Vertikalen geneigt. Wenn der Reifen 42 parallel zur Fahrzeuglängsrichtung ausgerichtet ist, ist die Mittellinie 58 der Lagerung 20 nach hinten und seitlich nach innen von dem Reifen 42 weg geneigt.

Diese Winkel bewirken einen Freiraum zwischen dem Kotschützer 10 und dem Reifen 42 während des Einschlags des Kotschützers 10. In den beiden Endkappen 50, 52 sind nicht dargestellte Gewindebohrungen enthalten, in welche Kopfschrauben einschraubbar sind, die der Befestigung an der Tragscheibe 36 des Befestigungsbocks 22 dienen.

Wie Fig. 9 zeigt, ist auf einem Traktorseitenteil 72 oder einer Fahrzeugrumpfplatte eine flexible, kratzfeste Schutzplatte 70 befestigt. Die Schutzplatte 70 ist derart angeordnet, daß bei eingeschlagenem Rad 42 der Kotschützer 10 mit der Schutzplatte 70 in Eingriff tritt, wodurch eine Beschädigung des Traktorseitenteils 72 oder des Kotschützers 10 vermieden werden kann.

Die Gummifederung bzw. der Gummidämpfer 20 zwischen den Tragarmen 14, 16 des Kotschützers 10 und dem Befestigungsbock 22 ermöglicht es, daß der Kotschützer 10 gegenüber dem Rad 42 elastisch nachgeben kann, wenn er an die Schutzplatte 70 anstößt. Die am Traktorseitenteil 72 befestigte Schutzplatte 70 liefert unabhängig vom Lenkwinkel, vom Pendelwinkel, von der Spurbreite und von der Reifengröße eine reibungslose und konsistente Kontaktfläche für den Kotschützer 10. Die Verwendung der Gummifederung bzw. des Gummidämpfers 20 und der Schutzplatte 70 ermöglichen für jede Spurweite und Reifengröße eine Wendigkeit des Fahrzeuges, die unabhängig davon ist, ob der Kotschützer 10 montiert ist oder nicht. Dieser Lösungsweg erfordert weder eine Anpassung der Kotschützeranordnung noch eine Anpassung von Anschlägen an die aktuelle Reifengröße und Spureinstellung. Die Biegsamkeit der Gummifederung bzw. des Gummidämpfers 20 welche sowohl ein seitliches federndes Auslenken oder Verbiegen als auch eine federnde Torsion um die Mittellinie 58 erlaubt, trennt oder dämpft den Kotschützer 10 und dessen Tragstruktur 12 von harten Stößen, die von der Fahrzeugachs- und Reifendynamik herrühren. Die Geometrie des Befestigungsdrehpunktes des Kotschützers 10 erlaubt einen größeren Einschlag des Kotschützers 10 und dessen Tragstruktur 12, wodurch ein größerer Radeinschlagwinkel möglich ist, ohne daß der Kotschützer 10 bei breiten Reifen stört. Die Drehpunktsgeometrie der vorliegenden Erfindung bewirkt ein Anheben des Kotschützers 10, wenn er einschlägt, wodurch ein ausreichender Abstand für einen größeren Einschlagbereich erhalten bleibt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kotschützerbefestigung zur Befestigung eines Kotschützers (10) an der Lenkachse eines Fahrzeuges in der Nähe eines lenkbaren Rades (42), bei der zwischen der Lenkachse und wenigstens einer Aufnahme (14, 16) für den Kotschützer (10) ein flexibles Teil angeordnet ist, welches eine Lagerung (20) mit einer Torsionsachse (58) enthält, die es erlaubt, den Kotschützer (10) relativ zur Lenkachse um die Torsionsachse (58) flexibel zu verdrehen und in Richtungen quer zu der Torsionsachse (58) flexibel auszulenken, dadurch gekennzeichnet, daß die Torsionsachse (58) gegenüber der Vertikalen geneigt verläuft, so daß ein oberer Achsabschnitt hinsichtlich der Längsausrichtung des Rades (42) weiter hinten liegt, als ein unterer Achsabschnitt.

2. Kotschützerbefestigung nach Anspruch 1, dadurch gekennzeichnet, daß die Torsionsachse (58) auch seitlich nach innen vom Rad (42) weggeneigt ist.

3. Kotschützerbefestigung nach Anspruch 1 oder 2, dadurch gekennzeichnet, daß die Lagerung (20) einen flexiblen Kern (53) und zwei keilförmige Endkappen (50, 52) enthält, die an den gegenüberliegenden Enden des Kerns (53) befestigt sind.

4. Kotschützerbefestigung nach Anspruch 3, dadurch gekennzeichnet, daß jede Endkappe (50, 52) eine dickere Seite und eine dünnere Seite aufweist und daß die Endkappen (50, 52) derart an dem Kern (53) befestigt sind, daß ihre dickeren Seiten in gegenüberliegende Richtungen weisen.

5. Kotschützerbefestigung nach Anspruch 3 oder 4, dadurch gekennzeichnet, daß jede Endkappe (50, 52) eine der Befestigung dienende, nach außen weisende Stirnfläche (62, 64) aufweist, die zueinander parallel ausgerichtet sind.

6. Kotschützerbefestigung nach einem der Ansprüche 3 bis 5, dadurch gekennzeichnet, daß der Kern (53) aus einem Stapel von abwechselnd aufeinander geschichteten ringförmigen Gummischeiben (54) und ringförmigen Stahlzwischenscheiben (56) gebildet ist.

7. Kotschützerbefestigung nach einem der Ansprüche 1 bis 6, dadurch gekennzeichnet, daß die Lagerung (20) einen hohlen im wesentlichen zylindrisch ausgebildeten flexiblen Kern (53) enthält.

8. Kotschützerbefestigung nach einem der Ansprüche 1 bis 7, dadurch gekennzeichnet, daß eine Haltevorrichtung (18) vorgesehen ist, die einen mit einem oberen Ende der Lagerung (20) verbundenen Sockel (26) und wenigstens ein von dem Sockel abstehendes Teil (24, 25) enthält, an dem die Aufnahme (14, 16) befestigt ist.

9. Kotschützerbefestigung nach einem der Ansprüche 1 bis 8, dadurch gekennzeichnet, daß ein Befestigungsbock (22) vorgesehen ist, der einen mit einem unteren Ende der Lagerung (20) verbundenen Sockel (36) und ein Tragteil (34) enthält, das an einem Bauteil der Lenkachse befestigt ist, welches mit dem Rad (42) beim Lenken verschwenkt wird.

## Claims

1. A mudguard attachment for attaching a mudguard (10) to the steering axle of a vehicle in the region of a steerable wheel (42), in which a flexible part is arranged between the steering axle and at least one holder (14, 16) for the mudguard (10) and has a support (20) with a torsional axis (58) which allows the mudguard (10) to turn flexibly relative to the steering axle about the torsional axis (58) and to deflect flexibly in directions transverse to the torsional axis, characterized in that the torsional axis (58) is inclined to the vertical, so that an upper axial section lies further to the rear in relation to the longitudinal direction of the wheel (42) than a lower axial section.

2. A mudguard attachment according to claim 1, characterized in that the torsional axis (58) is also inclined laterally towards the interior, away from the wheel (42).

3. A mudguard attachment according to claim 1 or 2, characterized in that the support (20) has a flexible core (53) and two wedge-formed end caps (50, 52) which are fixed to opposite ends of the core (53).

4. A mudguard attachment according to claim 3, characterized in that each end cap (50, 52) has a thicker side and a thinner side and in that the end caps (50, 52) are so fixed to the core (53) that their thicker sides point in opposite directions.

5. A mudguard attachment according to claim 3 or 4, characterized in that each end cap (50, 52) has an outwardly facing end surface (62, 64) serving for attachment, which end faces are parallel to one another.

6. A mudguard attachment according to any of claims 3 to 5, characterized in that the core (53) is formed from a stack of annular rubber discs (54) and annular steel intermediate discs (56) alternating with one another.

7. A mudguard attachment according to any of claims 1 to 6, characterized in that the support (20) has a hollow, substantially cylindrically shaped flexible core (53).

8. A mudguard attachment according to any of claims 1 to 7, characterized in that a mounting device (18) is provided and has a pedestal (26) attached to the upper end of the support (20) and at least one part (24, 25) projecting from the pedestal to which the holder (14, 16) is fixed.

9. A mudguard attachment according to any of claims 1 to 8, characterized in that an attachment bracket (22) is provided and has a pedestal (36) attached to the lower end of the support (20) and a support part (34) which is fixed to a component of the steering axle which is turned with the wheel (42) when steering.

## Revendications

1. Dispositif de fixation de garde-boue pour fixer un garde-boue (10) sur l'essieu directeur d'un véhicule à proximité d'une roue orientable (42), dans lequel entre l'essieu directeur et au moins un support (14,16) pour le garde-boue (10) est disposée une partie flexible, qui contient un support (20) comportant un axe de torsion (58) qui permet de faire tourner de manière souple le garde-boue (10) par rapport à l'essieu directeur autour de l'axe de torsion (58) et de le faire dévier d'une manière souple dans des directions transversales à l'axe de torsion (58), caractérisé en ce que l'axe de torsion (58) est incliné par rapport à la verticale de sorte qu'une partie supérieure de l'axe est située plus en arrière qu'une partie inférieure de l'axe, par rapport à l'alignement longitudinal de la roue (42).

2. Dispositif de fixation de garde-boue selon la revendication 1, caractérisé en ce que l'axe de torsion (58) est également incliné latéralement en s écartant de la roue (42) en direction de l'intérieur.

3. Dispositif de fixation de garde-boue selon la revendication 1 ou 2, caractérisé en ce que le support (20) contient un noyau flexible (53) et deux capuchons d'extrémité en forme de coins (50,52), qui sont fixés sur les extrémités opposées du noyau (53).

4. Dispositif de fixation de garde-boue selon la revendication 3, caractérisé en ce que chaque capuchon d'extrémité (50,52) possède un côté plus épais et un côté plus mince, et que les capuchons d'extrémité (50,52) sont fixés au noyau (53) de telle sorte que leurs côtés les plus épais sont dirigés dans des sens opposés.

5. Dispositif de fixation de garde-boue selon la revendication 3 ou 4, caractérisé en ce que chaque capuchon d'extrémité (50,52) comporte une surface frontale (62,64), qui est utilisée pour la fixation et est dirigée vers l'extérieur, ces surfaces frontales étant parallèles entre elles.

6. Dispositif de fixation de garde-boue selon l'une des revendications 3 à 5, caractérisé en ce que le noyau (53) est formé d'un empilage de rondelles annulaires en caoutchouc (54) et de rondelles intercalaires annulaires en acier (56), qui sont empilées d'une manière alternée les unes sur les autres.

7. Dispositif de fixation de garde-boue selon l'une des revendications 1 à 6, caractérisé en ce que le support (20) contient un noyau flexible creux (53) avec une forme essentiellement cylindrique.

8. Dispositif de fixation de garde-boue selon l'une des revendications 1 à 7, caractérisé en ce qu'il est prévu un dispositif de retenue (18), qui contient un socle (26) relié à une extrémité supérieure du support (20), et au moins une partie (24,25), qui fait saillie sur le socle et à laquelle est fixé le support (14,16).

9. Dispositif de fixation de garde-boue selon l'une des revendications 1 à 8, caractérisé en ce qu'il est prévu un bloc de fixation (22), qui contient un socle (36) relié à une extrémité inférieure du support (20), une partie de support (34), qui est fixée à un composant de l'essieu directeur et qui pivote avec la roue (42) lors du braquage.
